(19)

Europäisches Patentamt
European Patent Office
Office européen des brevets

(11) **EP 2 884 790 B1**

(12) **EUROPEAN PATENT SPECIFICATION**

(45) Date of publication and mention
of the grant of the patent:
**19.08.2020 Bulletin 2020/34**

(51) Int Cl.:
**H04W 16/18** *(2009.01)*     **H04W 28/08** *(2009.01)*
**H04W 16/22** *(2009.01)*

(21) Application number: **13005739.1**

(22) Date of filing: **10.12.2013**

(54) **TRAFFIC STEERING IN MULTI LAYER RADIO NETWORKS**

VERKEHRSREGELUNG IN MEHRSCHICHTIGEN FUNKNETZWERKEN

DIRECTION DE TRAFIC DANS DES RÉSEAUX RADIO À COUCHES MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2015 Bulletin 2015/25**

(73) Proprietor: **Deutsche Telekom AG
53113 Bonn (DE)**

(72) Inventor: **Pfeiffer, Bernhard
51465 Bergisch Gladbach (DE)**

(74) Representative: **Raible Deissler Lehmann
Patentanwälte PartG mbB
Senefelderstrasse 26
70176 Stuttgart (DE)**

(56) References cited:
**WO-A1-2006/119743**     **US-A- 6 069 894**

- **Danish Nisar, M ET AL: "Multi-RAT Traffic
  Steering - Why, when, and how could it be
  beneficial?", , December 2011 (2011-12), pages
  1-7, XP055119796, Retrieved from the Internet:
  URL:http://www.nomor.de/uploads/94/e2/94e2
  822c75480373b78b73c5adf862b6/WhitePaperNo
  m or_MultiRAT_TS_2011-10.pdf [retrieved on
  2014-05-23]**
- **ANONYMOUS: "LTE-Radio Network Planning
  with PegaPlan", INTERNET CITATION, 5
  December 2010 (2010-12-05), pages 1-9,
  XP007919823, Retrieved from the Internet:
  URL:http://www.pegaware.com/fileadmin/Pega
  Web/content/autoren/data/news/LTE_radio_ne
  twork_planning_english.pdf [retrieved on
  2011-11-28]**
- **VANHATUPA ET AL: "Performance model for
  IEEE 802.11s wireless mesh network deployment
  design", JOURNAL OF PARALLEL AND
  DISTRIBUTED COMPUTING, ELSEVIER,
  AMSTERDAM, NL, vol. 68, no. 3, 13 May 2007
  (2007-05-13), pages 291-305, XP022450222, ISSN:
  0743-7315, DOI: 10.1016/J.JPDC.2007.05.001**

## Description

### Technical background

The invention relates to a method for distributing an amount of traffic in a radio network among different layers and/or radio access technologies (RAT) of a multi layer radio network in a radio network planning tool.

Today many radio network areas are covered by several layers probably of different RAT. For example, in most countries exist homogeneous network layers of a so-called "Global System for Mobile communication" (GSM)-standard, sometimes consisting of GSM 900 and GSM 1800 layers, and in addition one or two layers of a so called "Universal Mobile Telecommunications System" (UMTS)-standard for a whole area in which the particular radio network is present. In many countries, the rollout of the so-called "Long Term Evolution" (LTE)-standard has started, mostly using different layers with different propagation frequencies.

As one RAT standard can comprise more than one layer, an amount of traffic within each RAT may be shared among different layers of a particular RAT.

The white paper "Multi-RAT Traffic Steering - Why, when, and how could it be beneficial?" of M. Danish Nisar, Volker Pauli, Eiko Seidel, Nomor Research GmbH, in Munich, Germany, December, 2011 discloses concepts involved in a design of generic traffic steering algorithms, and provides a description of some primitive traffic steering algorithms. Further, an overview of how more sophisticated traffic steering algorithms can be designed, and how could their performance be compared in terms of different performance metrics.

WO 2006/119743 A1 discloses a method for generating a space-related traffic database for a radio network which comprises a plurality of radio cells which can each be assigned to a group of radio cells, with a region to be mapped being subdivided into area elements by a grid and each of the area elements being allocated a respective assignment probability for each of the radio cells which supply an area element and a land-use class from amongst a finite group of land-use classes by generation being achieved by a minimization process in which the distance between the measured traffic of a radio cell and the predicted traffic of the radio cell is minimized for each radio cell. The traffic which is to be predicted of a respective radio cell being set equal to the sum of area elements which are weighted by land use class-specific and group-specific coefficients which area elements of the respective radio cell for a respective land-use class and for a respective group of radio cells are produced from the assignment probabilities of the area elements to the radio cells included in the process, and the coefficients are determined by the minimization process and assigned to the corresponding radio cell.

The paper entitled "Performance model for IEEE 802.11s wireless mesh network deployment design" of Timo Vanhatupa et al. describes a performance model developed for the deployment design of IEEE 802.11s Wireless Mesh Networks (WMN). The described model contains seven metrics to analyze the state of WMN, and mechanisms to use multiple evaluation criteria in WMN performance optimization. The model can be used with various optimization algorithms.

US 6,069,894 describes a set of logical networks which is established on top of a physical network. A predefined objective function is optimized with respect to at least one set of decision variables and the decision variables in accordance with the optimization are used to control the operation of the overall network system. Physical transmission resources are partitioned among logical networks. Traffic loads are distributed among routes interconnecting the nodes of node pairs.

In a radio network planning tool called "PegaPlan®" of Deutsche Telekom already exists a possibility for using one common traffic database for all layers of one RAT. In "PegaPlan®", a traffic offered by subscribers is automatically shared between all layers of one RAT by using multi layer cell models. These multi layer cell models have only a very rough consideration of an available cell capacity and cell load. For example, a LTE multi layer cell model takes a different bandwidth of cells of different layers into account in order to determine traffic split coefficients in terms of assignment probabilities. Further details are described in a paper entitled "LTE-Radio Network Planning with PegaPlan" of the Deutsche Telekom AG published in WissenHeute Jg. 63 6/2010.

### Summary of the invention

The idea of multi layer / inter RAT traffic steering is to extend the concept of "PegaPlan®" and to distribute traffic between different layers and/or RAT. The proposed traffic steering method takes into account coverage, cell load and capacity, and a traffic steering policy. The gain of traffic steering is a better utilization of all network layers and to serve a traffic demand of customers with a best appropriate network layer.

The term "RAT" means in the context of the present invention a radio access technology such as for example TETRA (Trans European trunked Radio), GSM, UMTS or LTE, wherein every technically suitable radio access technology may also be used.

In order to achieve the above mentioned gain, the present invention provides a method for traffic steering in a radio network planning tool with a traffic steering policy for reaching predefined traffic load thresholds and priorities for different traffic types in a multi layer radio network comprising at least two layers of one or more radio access technologies, the method comprising the following steps:

a) dividing a network planning area by a grid into unit areas;

b) determining for each unit area which layers and/or radio access technologies cover this particular unit area;

c) subdividing the network planning area in sub areas, each sub area consisting of at least one unit area being covered by a set of cells comprising at least two cells, and wherein the cells belong to different layers or radio access technologies;

d) calculating a realtime traffic for every of these sub areas wherein a sub area with n cells having coverage for realtime traffic being denoted by the set $s^{RT}(n)$ of n cell numbers $i_k$: $s^{RT}(n)=\{i_1, i_2, ..., i_n\}$, and, for every set of cells, setting all traffic weight coefficients for realtime traffic $a^{RT}$ for the set of cells $s^{RT}(n)$ initially to 1 divided by a size of the set of cells wherein a traffic weight coefficient for realtime traffic $a^{RT}$ of a cell $i_1$ describes a contribution of the realtime traffic $t^{RT}(s^{RT}(n))$ of the set of cells $s^{RT}(n)$ to cell $i_1$: $a^{RT}{}_{i1, i2, ..., in}$

e) determining for every cell $i_1$ of the radio network a relative realtime traffic load $Trel_{i_1}^{RT}$ using the initial traffic weight coefficients, wherein the relative realtime traffic load $Trel_{i_1}^{RT}$ for a particular cell $i_1$ equals an absolute traffic load $T_{i_1}^{RT}$ of the particular cell $i_1$ divided by a product of an estimated realtime capacity of the particular cell $i_1$ and a predefined realtime load threshold of a particular layer of the particular cell $i_1$, wherein the absolute traffic load $T_{i_1}^{RT}$ of cell $i_1$ is given by:

$$T_{i_1}^{RT} = \sum_{s^{RT}(n)\,with\,i_1 \in s^{RT}(n)} a_{i1,i2,,...,in}^{RT}\; t^{RT}(s^{RT}(n))$$

f) ordering the cells by their relative realtime traffic load;

g) determining the highest loaded cell which is assumed to have a cell number i, wherein the layer of cell i is assumed to have a priority p(i) for the realtime traffic;

h) considering all sets of cells which contain cell i, and, for all cells j of these sets of cells which have a higher traffic priority for the realtime traffic than cell i, calculating an amount of possible additional realtime traffic of these cells j according to their load thresholds for the realtime traffic;

i) reducing the realtime traffic for cell i by the amount of possible additional realtime traffic, wherein the amount of possible additional traffic is assigned to all cells j of all sets of cells which contain cell i and which have a higher traffic priority for the realtime traffic than the layer of cell i, and wherein the traffic weight coefficients are recalculated for all involved cells of these sets of cells which contain cell i,

j) repeating the steps h) to i) for all the cells of the network, wherein at the end of this procedure, the realtime traffic is assigned to the cells in the network according to the steering policy as best as possible,

k) repeating the same algorithm for a non-realtime traffic, wherein a capacity of the cells for the non-realtime traffic is reduced by the realtime traffic of the cells wherein the reduced non realtime traffic capacity is available for non realtime traffic and is used for calculation of non realtime traffic weight coefficients.

The main idea of the present method is that in a first step sub areas which are covered by several cells of different network layers with optionally also different RAT are calculated. Further, their amount of traffic i.e. the amount of data that is sent and/or received by a particular cell is calculated. For every sub area, this traffic can be potentially shifted between the covering cells. For this traffic shift, the cell capacity has to be taken into account.

That means for every cell, the absolute capacity for the different traffic types has to be estimated. For the estimation of the absolute capacity, [Erlang] and/or [kbit/sec] may be used as unit. The capacity estimation has to be done for each layer and each RAT used in a respective pre-defined steering policy.

A rough estimation of the cell capacity can be done for example by:

for GSM: using a number of transceivers (TRX) of a particular cell,

for UMTS: using load factors of bearers of particular services,

for LTE: using the fact that cell capacity is proportional to a cell bandwidth.

In a pre-calculation for every transceiver number a maximum traffic in [Erlang] is calculated which corresponds with a configured "threshold Max. Voice Blocking". For one cell with a certain number of transceivers a traffic type capacity is estimated using the results of this pre-calculation. The number of transceivers also determines available static and dynamic packet data channels of a particular cell. Together with a pre-calculated average time slot throughput the maximum available throughput can be calculated. The result of this calculation may be used to derive a capacity of another traffic type in [kbit/sec].

Examples for traffic types may be real time traffic (RT), such as voice and non real time traffic (NRT), such as browsing or FTP.

UMTS services use bearers with a fixed data rate for uplink and downlink. Every bearer data rate corresponds with a cell load factor. These load factors can be taken into account for a real time (RT) cell capacity estimation. For this estimation also a certain amount of inter cell interference is assumed. For non real time (NRT) services a similar approximation has to be used.

For LTE cells, a configured cell bandwith is taken into account. With an assumption about an average data rate per resource block an absolute cell capacity for non real time traffic in [kbit/sec] can be estimated. For real time traffic service bearers with fixed data rates are used which allows an estimation of a cell capacity for real time traffic in [Erlang].

The idea of inter RAT traffic steering is that one traffic type, e.g. voice can be served by different RAT.

Therefore, at least some service specific parameters have to be defined for all RAT in common. Such service specific parameters may be traffic subscriber values, and real time traffic (RT) activity or a non real time traffic (NRT) overhead because these parameters influence an amount of total traffic offered by the particular subscribers.

It is further necessary that all RAT use the same RT and NRT database. A simple approach is to derive the total traffic for all RAT at one file by summing up traffic generated by the RAT specific traffic data base and services. The result of this summing process is the total RT and NRT traffic in subscribers/km$^2$ in one file.

In an example, a traffic database of one single radio access technology is selected for deriving a database that is used by all radio access technologies of the cells of the network.

In the last calculation step, traffic is modified for each cell by using individual traffic weight coefficients in following coverage and capacity calculations for all involved network layers and RAT.

In another embodiment of the present invention, calculation of traffic weight coefficients takes into account the pre-defined traffic steering policy, wherein the traffic steering policy distinguishes between different traffic types and defines certain load thresholds and priorities for all network layers of all radio access technologies.

The aim of the traffic steering policy is to reach pre-defined load thresholds for different traffic types. Thus, a traffic steering policy consists of at least two parts. First of all, certain traffic types and their priorities have to be defined. In the next step, for the different network layers and RAT a set of load thresholds and priorities have to be defined for each traffic type. These load thresholds and priorities are used for shifting traffic between cells of different RAT in areas where several RAT have coverage. Thus, traffic of each type becomes balanced between different RAT and their respective layers.

In the case of two or more overlapping cells of RAT of the same or different kind covering one sub area, the overlapping coverage areas and the respective traffic weight coefficients of the cells have to be calculated.

The area which is covered by the multi layer radio network is decomposed in sub areas where one or several cells have coverage. One sub area where n cells have coverage for traffic type X is denoted by the set $s^X(n)$ of n cell numbers $i_k$ according to the following formula:

$$s^X(n) = \{i_1, i_2, \ldots, i_n\}$$

In this application, $i_k$ is also denoted as ik, e.g. $i_1$=i1, $i_2$=i2, $i_{n-1}$=in-1, $i_n$=in etc.

A maximum size of such a set is determined by a number of layers which are considered in a particular calculation. Cell numbers of a particular set should be ordered. A set with only one cell number means that in the respective sub area only one cell has coverage. To every traffic type X one single traffic value $t^X(s^X(n))$ belongs. To a set $s^X(n)$ of size n there belong n traffic weight coefficients with numbers of the particular set as indices. The first index of one of these coefficients denotes the serving cell number to which the traffic $t^X(s^X(n))$ contributes with its particular coefficient. For example for the considered set $s^X(n)$ the contribution of the traffic $t^X(s^X(n))$ to cell $i_1$ is described by the traffic weight coefficient:

$a^X_{i1, i2, \ldots, in}$

The contribution of the traffic $t^X(s^X(n))$ to cell $i_2$ is described by the traffic weight coefficient:

$a^X_{i2, i3, \ldots, in, i1}$

The two examples above show, that the n traffic coefficients of one set $s^X(n)$ can be generated by performing cyclic permutations of length n of n indices. For set $s^X(n)$ a cyclic permutation $\pi$ of length n is defined in a two row notation:

$$\pi = \begin{pmatrix} i_1 & i_2 & \dots & i_{n-1} & i_n \\ i_2 & i_3 & \dots & i_n & i_1 \end{pmatrix}$$

In a representation notation cyclic permutation $\pi$ of length n is described by:

$$\pi(\texttt{i}_1,\ \texttt{i}_2,\ \dots,\ \texttt{i}_{n-1},\ \texttt{i}_n)\ =\ (\texttt{i}_2,\ \texttt{i}_3,\ \dots,\texttt{i}_n,\ \texttt{i}_1)$$

A repetition of k times of this cyclic permutation is denoted with $\pi^k$. With this notation the necessary normalization condition of all the n traffic weight coefficients of set $s^X(n)$ can be described by:

$$\sum_{k=1}^{n} a^X{}_{\pi^k(i_1, i_2, \dots i_n)} = 1$$

The whole traffic of type X of cell $i_1$ is the sum over all sets which contain a particular cell number with the corresponding traffic weight coefficients:

$$T_{i_1}^X = \sum_{s^X(n) with\ i_1 \in s^X(n)} a_{i1,i2,\dots,in}^X\ t^X(s^X(n))$$

Traffic steering calculations have to be performed for every traffic type separately. An order for these calculations is given by a pre-defined traffic steering policy via pre-defined priorities of the traffic types.
A calculation for balancing traffic of two types RT and NRT among cells, wherein RT has the higher priority, may consist of the following steps:

1. For balancing the RT traffic as the traffic with highest priority the whole absolute RT cell capacity in [Erlang] is considered to be available for the RT traffic.

2. For every set of cells set all traffic weight coefficients of the set initially equal to 1 / (size of set) .

3. Determine for every cell i of the network the relative RT traffic load $Trel_i^{RT}$ using the initial traffic weight coefficients, wherein $Trel_i^{RT}$ equals $T_i^{RT}$ divided by (RT capacity of cell i)·(RT load threshold of layer (cell i)).

4. The cells are ordered by their relative RT traffic load. The algorithm starts with the highest loaded cell which is assumed to have the cell number i. The cell i is assumed to have a priority p(i) for RT traffic. For this cell i all sets which contain this cell i are considered. For all cells j of these sets which have a higher RT traffic priority than cell i, which means p(j) > p(i), the amount of possible additional RT traffic of them is calculated according to their load thresholds.

5. The RT traffic of cell i is reduced by this amount of traffic, and this traffic is assigned to all these cells j of all sets which contain cell i. The RT traffic coefficients are re-calculated for all involved cells.

6. These steps are repeated for all cells of the network. At the end of this procedure, the RT traffic is assigned to the cells in the network according to the steering policy as best as possible.

7. In the second run the same algorithm is repeated for NRT traffic. For this step, the RT traffic of the cells is converted from [Erlang] to [kbit/sec]. The absolute NRT capacity of the cells is reduced by this RT traffic in [kbit/sec] of the cells. This reduced NRT capacity is available for NRT traffic and is used for the calculation of the NRT traffic steering coefficients. This calculation itself uses the same steps as described above for the RT traffic coefficient calculation.

At the end of such an algorithm for all sets of overlapping cells traffic weight coefficients are available for every traffic type. The traffic weight coefficients can be used in further RAT specific calculations, such as RAT specific coverage and capacity calculations.

In yet another embodiment of the present invention traffic steering is taken into account by capacity and coverage calculations of at least one radio access technology of at least one cell.

For usage of the above mentioned balancing method in a radio network planning tool, several calculation steps have to be modified in order to use inter RAT traffic steering. Traffic steering is used if a network contains cells of different layers of one and/or different RAT. As an example a network which contains GSM, UMTS, and LTE cells is considered. It is assumed that an UMTS calculation result is requested by a user. A first traffic steering pixel calculation considers all cells of all RAT. Afterwards, traffic weight coefficients are calculated. The calculated traffic weight coefficients are used for calculating the UMTS result. Thus, it is necessary that also during the following UMTS result calculation the field strength of cells of other RAT always have to be considered in order to determine at every unit area the set of covering layers and/or RAT and their traffic weight coefficients.

It will be understood that the features mentioned above and those described hereinafter can be used not only in the combination specified but also in other combinations or on their own, without departing from the scope of the present disclosure.

Various implementations are schematically illustrated in the drawings by means of an embodiment by way of example and are hereinafter explained in detail with reference to the drawings. It is understood that the description is in no way limiting on the scope of the present disclosure and is merely an illustration of a preferred embodiment.

Further advantages arise from the subject matter of the dependent claims.

## Brief Description of the Drawings

Figure 1 is an exemplary table of traffic priorities and load thresholds according to a pre-defined traffic steering policy.

Figure 2 shows an example of an algorithm using the present method by considering overlap of two cells.

Figure 3 shows an example of an algorithm using the present method by considering overlap of three cells.

## Detailed description of preferred embodiments

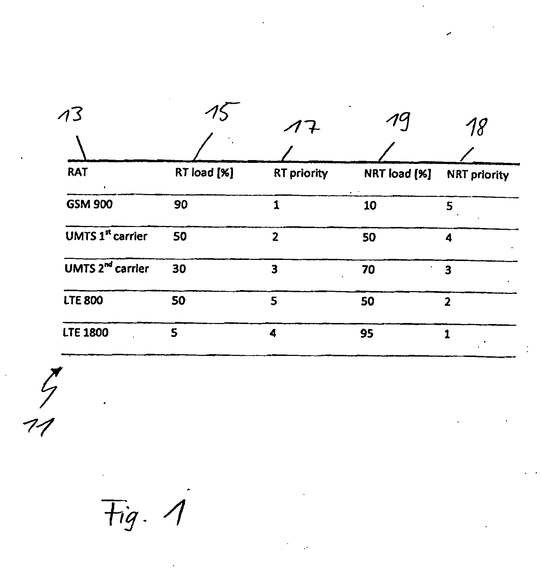

Traffic policy rules are shown in Figure 1. An aim of a traffic steering policy is to reach pre-defined load thresholds and priorities for different traffic types such as for example real time (RT) traffic which is for example a call and non real time (NRT) traffic such as browsing or FTP usage. This differentiation may be extended by introducing QoS classes for the mentioned traffic types. In the example shown in Figure 1, RT traffic always has a higher priority than NRT traffic.

A traffic steering policy consists of two parts that have to be defined by for example a technician or a supervisor of a particular radio network. For each layer of each RAT there are a respective load threshold and a respective priority for each traffic type, namely RT and NRT respectively. Thus, the steering policy table 11 as shown in Figure 1 comprises one column 13 containing the different layers of different RAT and two columns for every traffic type, wherein thresholds are given in columns 15, 19 and priorities are given in columns 17, 18 for every traffic type. An overview of respective radio access technologies (RAT) and their underlying layers that are part of the respective traffic steering policy is given in column 13.

A traffic steering algorithm uses the steering policy table 11 for shifting traffic between cells of different layers of one or different RAT in areas where several layers of one and/or of different RAT have coverage. Firstly, RT traffic is balanced between the particular layers according to the load thresholds and priorities defined in columns 15 and 17. In a second step NRT traffic which has a lower priority is balanced.

In the example shown in Figure 1, the RAT GSM900 has the highest priority for RT traffic. In areas where several layers have coverage, a GSM 900 cell should serve up to 90% of their capacity. Only if more RT traffic is offered by the remaining traffic, the remaining traffic is served, i.e. processed by other layers and/or RAT according to their particular priorities and load thresholds defined in the traffic steering policy shown in table 11.

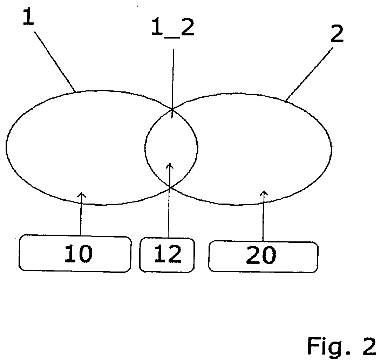

In Figure 2, an example is shown for voice RT traffic type. There are two cells 1 and 2 considered. Cell 1 is a GSM 900 cell and cell 2 an UMTS 1st carrier cell. Priorities and load thresholds are assumed according to traffic steering policy shown in table 11 of Figure 1.

It is assumed that GSM cell 1 has a RT capacity of 20 [Erlang] and the UMTS cell 2 has a RT capacity of 30 [Erlang]. Furthermore, it is assumed that the two cells 1 and 2 have coverage in common in an area 1_2 with 10 [Erlang] RT traffic. Additionally both cells 1 and 2 cover alone respectively 10 [Erlang]. The respective RT traffic is indicated by arrows 10, 12 and 20, respectively.

The RT traffic of cells 1 and 2 is described by the following equations:

$$T_1^{RT} = t_1^{RT} + a_{12}^{RT} \cdot t_{12}^{RT} \cdot$$

$$T_2^{RT} = t_2^{RT} + a_{21}^{RT} \cdot t_{21}^{RT} \cdot$$

wherein

$$t_{12}^{RT} = t_{21}^{RT}$$

and wherein T means absolute traffic, t means a traffic contribution and a is a respective traffic weight coefficient.

Because GSM 900 cell 1 has the highest priority for RT traffic, a traffic steering algorithm tries firstly to fill up the GSM 900 cell to the capacity limit of 90%·20 [Erlang] = 18 [Erlang] which can be reached with $a_{12}$=0.8. Thus, the solution is:

$$T_1^{RT} = 10 \ [Erlang] + 0.8 \cdot 10 \ [Erlang] = 18 \ [Erlang]$$

$$T_2^{RT} = 10 \ [Erlang] + 0.2 \cdot 10 \ [Erlang] = 12 \ [Erlang]$$

The traffic distribution which is given by these coefficients is used for the following GSM and UMTS coverage and capacity calculations for the RT traffic type.

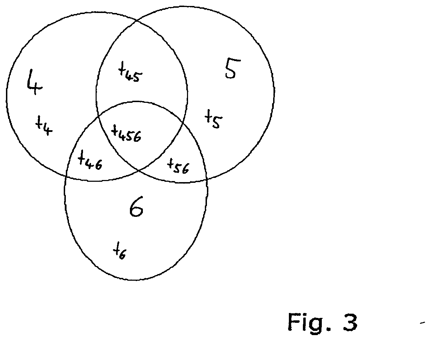

In Figure 3, the example shown in Figure 2 is now extended. There are three cells 4, 5, 6 with a particular amount of traffic t4, t5, t6 occurring in these cells and their overlapping sub areas which provide an particular amount of traffic t45, t46, t56, and t456. The three cells 4, 5 and 6 include each a layer of optionally different RAT.

In the example shown in Figure 3, the three cells denoted with cell number 4, 5 and 6 have sub areas where only one cell has coverage, sub areas where two cells have simultaneously coverage and one sub area where all three cells have coverage for a traffic type X.

With the notation introduced in the example shown in Figure 2, the traffic of type X of the three cells is given by the equations:

$$T_4^X = t_4^X + a_{45}^X \cdot t_{45}^X + a_{46}^X \cdot t_{46}^X + a_{456}^X \cdot t_{456}^X$$

$$T_5^X = t_5^X + a_{54}^X \cdot t_{54}^X + a_{56}^X \cdot t_{56}^X + a_{564}^X \cdot t_{564}^X$$

$$T_6^X = t_6^X + a_{64}^X \cdot t_{64}^X + a_{65}^X \cdot t_{65}^X + a_{645}^X \cdot t_{645}^X$$

wherein

$t_{45} = t_{54}$, $t_{64} = t_{46}$, $t_{56} = t_{65}$ and $t_{456} = t_{564} = t_{645}$.

In this example the following conditions must be fulfilled for the particular traffic weight coefficients:

$$a_{45}^X + a_{54}^X = a_{46}^X + a_{64}^X = a_{56}^X + a_{65}^X = 1$$

$$a_{456}^X + a_{564}^X + a_{645}^X = 1$$

**Claims**

1. Method for traffic steering in a radio network planning tool with a traffic steering policy for reaching predefined traffic load thresholds (15, 19) and priorities (17, 18) for different traffic types in a multi layer radio network comprising at least two layers of one or more radio access technologies (13), the method comprising the following steps:

a) dividing a network planning area by a grid into unit areas;

b) determining for each unit area which layers and/or radio access technologies (13) cover this particular unit area;

c) subdividing the network planning area in sub areas (1_2), each sub area (1_2) consisting of at least one unit area being covered by a set of cells comprising at least two cells, and wherein the cells belong to different layers or radio access technologies (13);

d) calculating a realtime traffic for every of these sub areas (1_2) wherein a sub area (1_2) with n cells having coverage for realtime traffic being denoted by the set $s^{RT}(n)$ of n cell numbers $i_k$: $s^{RT}(n)=\{i_1, i_2, ..., i_n\}$, and, for every set of cells, setting all traffic weight coefficients for realtime traffic $a^{RT}$ for the set of cells $s^{RT}(n)$ initially to 1 divided by a size of the set of cells (1, 2, 4, 5, 6) wherein a traffic weight coefficient for realtime traffic $a^{RT}$ of a cell $i_1$ describes a contribution of the realtime traffic $t^{RT}(s^{RT}(n))$ of the set of cells $s^{RT}(n)$ to cell $i_1$: $a^{RT}_{i1, i2, ..., in}$

e) determining for every cell $i_1$ (1, 2, 4, 5, 6) of the radio network a relative realtime traffic load $Trel^{RT}_{i_1}$ using the initial traffic weight coefficients, wherein the relative realtime traffic load $Trel^{RT}_{i_1}$ for a particular cell $i_1$ equals an absolute traffic load $T^{RT}_{i_1}$ of the particular cell $i_1$ divided by a product of an estimated realtime capacity of the particular cell $i_1$ and a predefined realtime load threshold (15) of a particular layer of the particular cell $i_1$, wherein the absolute traffic load $T^{RT}_{i_1}$ of cell $i_1$ is given by:

$$T^{RT}_{i_1} = \sum_{s^{RT}(n)\,with\,i_1 \in s^{RT}(n)} a^{RT}_{i1,i2,,...,in}\ t^{RT}(s^{RT}(n))$$

f) ordering the cells by their relative realtime traffic load;

g) determining the highest loaded cell which is assumed to have a cell number i, wherein the layer of cell i is assumed to have a priority p(i) (17) for the realtime traffic;

h) considering all sets of cells which contain cell i, and, for all cells j of these sets of cells which have a higher traffic priority (17) for the realtime traffic than cell i, calculating an amount of possible additional realtime traffic of these cells j according to their load thresholds (15) for the realtime traffic;

i) reducing the realtime traffic for cell i by the amount of possible additional realtime traffic, wherein the amount of possible additional traffic is assigned to all cells j of all sets of cells which contain cell i and which have a higher traffic priority (17) for the realtime traffic than the layer of cell i, and wherein the traffic weight coefficients are recalculated for all involved cells of these sets of cells which contain cell i,

j) repeating the steps h) to i) for all the cells of the network, wherein at the end of this procedure, the realtime traffic is assigned to the cells in the network according to the steering policy as best as possible,

k) repeating the same algorithm for a non-realtime traffic, wherein a capacity of the cells for the non-realtime traffic is reduced by the realtime traffic of the cells wherein the reduced non realtime traffic capacity is available for non realtime traffic and is used for calculation of non realtime traffic weight coefficients.

2. Method according to claim 1, wherein the traffic steering policy consists of service priorities and load thresholds for service groups and for the network layers and/or radio access technologies (13).

3. Method according to any of the preceding claims, wherein different radio access technologies (13) are chosen out of the following list of radio access technologies (13): TETRA, GSM, UMTS and LTE.

4. Method according to any of the preceding claims, wherein a capacity of a particular traffic type is estimated in Erlang and/or kbit/second for each layer and each radio access technology (13) used in the radio network planning tool separately.

5. Method according to claim 4, wherein the estimation of the capacity in step e) is done for GSM by using a number of transceivers of a particular cell, for UMTS by using load factors of bearers of services and for LTE by using a bandwidth of a particular cell.

6. System for steering traffic in a multi layer radio network, wherein the system is configured for steering traffic according to the method described in any of claims 1 to 5.

**Patentansprüche**

1. Verfahren zum Steuern von Verkehr in einem Funknetzwerkplanungswerkzeug mit einer Verkehrssteuerungsregel zum Erreichen vordefinierter Verkehrslastschwellenwerte (15, 19) und Prioritäten (17, 18) für verschiedene Verkehrstypen in einem mehrschichtigen Funknetzwerk, das mindestens zwei Schichten mit einer oder mehreren Funkzugangstechnologien (13) umfasst, wobei das Verfahren die folgenden Schritte umfasst:

   a) Unterteilen eines Netzwerkplanungsgebietes durch ein Raster in Einheitsgebiete;
   b) Bestimmen für jedes Einheitsgebiet, welche Schichten und/oder Funkzugangstechnologien (13) dieses spezielle Einheitsgebiet abdecken;
   c) Untergliedern des Netzwerkplanungsgebietes in Teilgebiete (1_2), wobei jedes Teilgebiet (1_2) aus mindestens einem Einheitsgebiet besteht, das von einem Satz von Zellen abgedeckt wird, der mindestens zwei Zellen umfasst, und wobei die Zellen zu verschiedenen Schichten oder Funkzugangstechnologien (13) gehören;
   d) Berechnen eines Echtzeitverkehrs für jedes dieser Teilgebiete (1_2), wobei ein Teilgebiet (1_2) mit n Zellen, die eine Abdeckung für Echtzeitverkehr aufweisen, durch den Satz sRT(n) von n Zellzahlen ik: sRT(n)={i1, i2, ..., in} bezeichnet wird, und für jeden Satz von Zellen alle Verkehrsgewichtskoeffizienten für Echtzeitverkehr aRT für den Satz von Zellen sRT (n) anfänglich auf 1 geteilt durch eine Größe des Satzes von Zellen (1, 2, 4, 5, 6) gesetzt werden, wobei ein Verkehrsgewichtskoeffizient für den Echtzeitverkehr aRT einer Zelle i1 einen Beitrag des Echtzeitverkehrs tRT (sRT (n)) des Satzes von Zellen sRT (n) zu Zelle aRTi1, i2, ..., in beschreibt.
   e) Bestimmen einer relativen Echtzeitverkehrslast $Trel_{i_1}^{RT}$ für jede Zelle i1 (1, 2, 4, 5, 6) des Funknetzwerkes unter Verwendung der anfänglichen Verkehrsgewichtskoeffizienten, wobei die relative Echtzeitverkehrslast $Trel_{i_1}^{RT}$ für eine bestimmte Zelle i1 gleich einer absoluten Verkehrslast $T_{i_1}^{RT}$ der bestimmten Zelle i1 geteilt durch ein Produkt aus einer geschätzten Echtzeit-Kapazität der bestimmten Zelle i1 und einem vordefinierten Echtzeit-Lastschwellenwert (15) einer bestimmten Schicht der bestimmten Zelle i1 ist, wobei die absolute Verkehrslast $T_{i_1}^{RT}$ der Zelle i1 gegeben ist durch:

$$T_{i_1}^{RT} = \sum_{s^{RT}(n) \text{mi } h\, i_1 \in s^{RT}(n)} a_{i1,i2,...,in}^{RT}\, t^{RT}(s^{RT}(n))$$

   f) Anordnen der Zellen nach ihrer relativen Echtzeitverkehrslast;
   g) Bestimmen der Zelle, die die höchste Last aufweist, von der angenommen wird, dass sie eine Zellennummer i aufweist, wobei angenommen wird, dass die Schicht der Zelle i eine Priorität p(i) (17) für den Echtzeitverkehr aufweist;
   h) Berücksichtigen aller Sätze von Zellen, die Zelle i enthalten, und, für alle Zellen j dieser Sätze von Zellen, die eine höhere Verkehrspriorität (17) für den Echtzeitverkehr als Zelle i haben, Berechnen einer Menge möglichen zusätzlichen Echtzeitverkehrs dieser Zellen j entsprechend ihren Lastschwellenwerten (15) für den Echtzeitverkehr;
   i) Reduzieren des Echtzeitverkehrs für Zelle i um den Betrag des möglichen zusätzlichen Echtzeitverkehrs, wobei der Betrag des möglichen zusätzlichen Verkehrs allen Zellen j aller Sätze von Zellen zugewiesen wird, die Zelle i enthalten und die eine höhere Verkehrspriorität (17) für den Echtzeitverkehr haben als die Schicht von Zelle i, und wobei die Verkehrsgewichtskoeffizienten für alle beteiligten Zellen dieser Sätze von Zellen, die Zelle i enthalten, neu berechnet werden,
   j) Wiederholen der Schritte h) bis i) für alle Zellen des Netzwerkes, wobei am Ende dieses Verfahrens der Echtzeitverkehr den Zellen des Netzwerkes gemäß der Steuerungsregel so gut wie möglich zugewiesen wird,
   k) Wiederholen desselben Algorithmus für einen Nicht-Echtzeitverkehr, wobei eine Kapazität der Zellen für den Nicht-Echtzeitverkehr um den Echtzeitverkehr der Zellen reduziert wird, wobei die reduzierte Nicht-Echtzeitverkehrskapazität für Nicht-Echtzeitverkehr verfügbar ist und für Berechnungen von Nicht-Echtzeitverkehrsgewichtskoeffizienten verwendet wird.

2. Verfahren nach Anspruch 1, wobei die Verkehrssteuerungsregel aus Dienstprioritäten und Lastschwellenwerten für Dienstgruppen und für die Netzwerkschichten und/oder Funkzugangstechnologien (13) besteht.

3. Verfahren gemäß einem der vorstehenden Ansprüche, wobei verschiedene Funkzugangstechnologien (13) aus der folgenden Liste von Funkzugangstechnologien (13) ausgewählt werden: TETRA, GSM, UMTS und LTE.

4. Verfahren gemäß einem der vorhergehenden Ansprüche, wobei eine Kapazität eines bestimmten Verkehrstyps für jede Schicht und jede Funkzugangstechnologie (13), die in dem Funknetzwerkplanungswerkzeug verwendet wird, separat in Erlang und/oder kbit/s geschätzt wird.

5. Verfahren nach Anspruch 4, wobei das Schätzen der Kapazität in Schritt e) für GSM unter Verwendung einer Anzahl von Transceivern einer bestimmten Zelle, für UMTS unter Verwendung von Lastfaktoren von Trägern von Diensten und für LTE unter Verwendung einer Bandbreite einer bestimmten Zelle durchgeführt wird.

6. System zum Steuern von Verkehr in einem Mehrschichtfunknetzwerk, wobei das System zum Steuern von Verkehr gemäß dem in einem der Ansprüche 1 bis 5 beschriebenen Verfahren konfiguriert ist.

**Revendications**

1. Procédé de direction de trafic dans un outil de planification de réseau radio ayant une politique de direction de trafic pour atteindre des seuils de volume de trafic ((15, 19) et des priorités prédéfinis (17, 18) pour différents types de trafic dans un réseau radio à couches multiples comprenant au moins deux couches d'une ou plusieurs technologies d'accès radio (13), le procédé comprenant les étapes suivantes :

   a) division de la zone de planification de réseau en zones d'unité par une grille;
   b) détermination pour chaque zone d'unité des couches et/ou technologies d'accès radio (13) couvrant cette zone d'unité particulière;
   c) subdivision de la zone de planification de réseau en sous-zones (1_2), chaque sous-zone (1_2) étant constituée d'au moins une zone d'unité couverte par un ensemble de cellules comprenant au moins deux cellules, et les cellules appartenant à différentes couches ou technologies d'accès radio (13);
   d) calcul d'un trafic en temps réel pour chacune de ces sous-zones (1_2), une sous-zone (1_2) avec n cellules ayant une couverture pour le trafic en temps réel étant indiquée par l'ensemble sRT(n) de n nombres de cellules ik: sRT(n)={i1, i2, ..., in}, et, pour chaque ensemble de cellules, réglant tous les coefficients de poids de trafic pour le trafic en temps réel aRT pour l'ensemble des cellules sRT (n) initialement à 1 divisé par une taille de l'ensemble des cellules (1, 2, 4, 5, 6), un coefficient de poids de trafic pour le trafic en temps réel aRT d'une cellule i1 décrivant une contribution du trafic en temps réel tRT (sRT (n)) de l'ensemble des cellules sRT (n) à la cellule i1: aRTi1, i2, ...,in
   e) détermination pour chaque cellule i1 (1, 2, 4, 5, 6) du réseau radio d'un volume de trafic en temps réel relatif $Trel_{i_1}^{RT}$ utilisant les coefficients de volume de trafic initiaux, le volume de trafic en temps réel relatif $Trel_{i_1}^{RT}$ pour une cellule particulière i1 étant égal à un volume de trafic absolu $T_{i_1}^{RT}$ de la cellule particulière i1 divisé par un produit d'une capacité en temps réel estimée de la cellule particulière i1 et un seuil de volume en temps réel prédéfini (15) d'une couche particulière de la cellule particulière i1, le volume de trafic absolu $T_{i_1}^{RT}$ de la cellule i1 étant donné par :

$$T_{i_1}^{RT} = \sum_{s^{RT}(n)\,with\,i_1 \in s^{RT}(n)} a_{i1,i2,...,in}^{RT}\ t^{RT}(s^{RT}(n))$$

   f) mise en ordre des cellules en fonction de leur volume de trafic en temps réel relatif;
   g) détermination de la cellule au volume le plus élevé qui est présumée avoir un numéro de cellule i, la couche de cellule i étant présumée avoir un p(i) prioritaire (17) pour le trafic en temps réel;
   h) considération de tous les ensembles de cellules contenant la cellule i, et, pour toutes les cellules j de ces ensembles de cellules qui présentent une priorité de trafic plus élevée (17) pour le trafic en temps réel que la cellule i, calcul d'un volume de trafic en temps réel supplémentaire possible de ces cellules j selon leurs seuils de volume (15) pour le trafic en temps réel;

i) réduction du trafic en temps réel pour la cellule i par le volume de trafic en temps réel supplémentaire possible, le volume de trafic supplémentaire possible étant attribué à toutes les cellules j de tous les ensembles de cellules contenant la cellule i et présentant une priorité de trafic plus élevée (17) pour le trafic en temps réel que la couche de la cellule i, et les coefficients de poids de trafic étant recalculés pour toutes les cellules concernées de ces ensembles de cellules contenant la cellule i,

j) répétition des étapes h) à i) pour toutes les cellules du réseau, le trafic en temps réel, à la fin de cette procédure, étant attribué le mieux possible à toutes les cellules dans le réseau selon la politique de direction,

k) répétition du même algorithme pour un trafic non en temps réel, la capacité des cellules du trafic non en temps réel étant réduite par le trafic en temps réel des cellules, la capacité du trafic non en temps réel réduite étant disponible pour le trafic non en temps réel et utilisée pour les calculs des coefficients de poids de trafic non en temps réel.

2. Procédé selon la revendication 1, la politique de direction de trafic étant constituée de priorités de service et de seuils de volume pour les groupes de service et pour les couches de réseau et/ou les technologies d'accès radio (13).

3. Procédé selon l'une quelconque des revendications précédentes, différentes technologies d'accès radio (13) étant choisies dans la liste suivante des technologies d'accès radio (13) : TETRA, GSM, UMTS et LTE.

4. Procédé selon l'une quelconque des revendications précédentes, une capacité d'un type de trafic particulier étant estimée en Erlang et/ou kbit/seconde pour chaque couche et chaque technologie d'accès radio (13) étant utilisée séparément dans l'outil de planification de réseau radio.

5. Procédé selon la revendication 4, l'estimation de la capacité à l'étape e) étant effectuée pour le GSM à l'aide d'un certain nombre d'émetteurs-récepteurs d'une cellule particulière, pour l'UTMS à l'aide de facteurs de volume de porteurs de services et pour le LTE à l'aide d'une bande passante d'une cellule particulière.

6. Système de direction de trafic dans un réseau radio à couches multiples, le système étant configuré pour la direction de trafic selon le procédé décrit dans l'une quelconque des revendications 1 à 5.

| RAT | RT load [%] | RT priority | NRT load [%] | NRT priority |
|---|---|---|---|---|
| GSM 900 | 90 | 1 | 10 | 5 |
| UMTS 1$^{st}$ carrier | 50 | 2 | 50 | 4 |
| UMTS 2$^{nd}$ carrier | 30 | 3 | 70 | 3 |
| LTE 800 | 50 | 5 | 50 | 2 |
| LTE 1800 | 5 | 4 | 95 | 1 |

Fig. 1

Fig. 2

Fig. 3

**EP 2 884 790 B1**

**REFERENCES CITED IN THE DESCRIPTION**

**Patent documents cited in the description**

- WO 2006119743 A1
- US 6069894 A